# EUROPEAN PATENT APPLICATION

(11) **EP 4 472 166 A1**
(43) Date of publication of application: **04.12.2024**
(21) Application number: 23759082.3
(22) Date of filing: 16.02.2023
(51) Int. Cl.: H04L 51/04, H04L 51/063, H04M 1/72436

(54) **MESSAGE SENDING METHOD AND APPARATUS, AND ELECTRONIC DEVICE**

(30) Priority: 22.02.2022 CN 202210161022
(71) Applicant: VIVO MOBILE COMMUNICATION CO., LTD., Dongguan, Guangdong 523863 (CN)
(72) Inventor: HU, Guangxiang, Dongguan, Guangdong 523863 (CN)
(74) Representative: Murgitroyd & Company
(86) International application number: PCT/CN2023/076489
(87) International publication number: WO 2023/160457

(57) **Abstract**

This application pertains to the field of communications technologies, and discloses a message sending method and apparatus and an electronic device. The method includes: receiving, by a first electronic device, a first input by a user for a first message, where the first message is M messages sent or unsent by the first electronic device, and M is a positive integer; performing, by the first electronic device, first processing on the first message in response to the first input, to obtain a second message; and sending, by the first electronic device, the second message through a server, where in a case that the first message is the M sent messages, the first processing is processing for updating message; or in a case that the first message is the M unsent messages, the first processing is message merging processing.

## Description

### CROSS-REFERENCE TO RELATED APPLICATIONS

This application claims priority to Chinese Patent Application No. 202210161022.0, filed in China on February 22, 2022, which is incorporated herein by reference in its entirety.

### TECHNICAL FIELD

This application pertains to the field of communications technologies, and specifically, relates to a message sending method and apparatus, and an electronic device.

### BACKGROUND

With development of electronic devices, the electronic devices have richer functions. For example, an electronic device can send a message by using instant messaging software.

Specifically, in the prior art, if a user needs to send a plurality of messages with respect to a same topic, for example, if the user needs to send three messages with respect to the same topic, after the user sends the first message, the user needs to edit the second message in an input box. However, when the user edits the second message, other users may send other messages in a conversational interface. In this case, messages sent by other users are interspersed between the first message and the second message sent by the user. Because the messages sent by the other users are interspersed among the plurality of messages sent by the user with respect to the same topic in the conversational interface, a layout of the plurality of messages sent by the user is disrupted. Therefore, the message sending mode in the prior art is not flexible enough.

### SUMMARY

An objective of embodiments of this application is to provide a message sending method and apparatus, and an electronic device to resolve a problem that a message sending mode in the prior art is not flexible enough.

According to a first aspect, an embodiment of this application provides a message sending method. The method includes: receiving, by a first electronic device, a first input by a user for a first message, where the first message is M messages sent or unsent by the first electronic device, and M is a positive integer; performing, by the first electronic device, first processing on the first message in response to the first input, to obtain a second message; and sending, by the first electronic device, the second message through a server, where in a case that the first message is the M sent messages, the first processing is processing for updating content; or in a case that the first message is the M unsent messages, the first processing is message merging processing.

According to a second aspect, an embodiment of this application provides a message sending method. The method includes: receiving, by a server, a second message and at least one group identifier that are sent by a first electronic device, where the second message is obtained by merging M messages unsent by the first electronic device, each group identifier is associated with at least one of the M messages, and the at least one group identifier is used to indicate, to the server, an order of forwarding messages in the second message; and classifying, by the server, the messages in the messages in the second message into at least one message group based on the at least one group identifier, and forwarding the at least one message group to a second electronic device sequentially according to the order indicated by the at least one group identifier.

According to a third aspect, an embodiment of this application provides a message sending method. The method includes: receiving, by a second electronic device, a second message forwarded by a server, where the second message is a message obtained by a first electronic device by updating content of M messages sent by the first electronic device; displaying, by the second electronic device, prompt information, where the prompt information is used to prompt a user that the M messages have been updated; receiving, by the second electronic device, a target input by the user for the prompt information; and displaying, by the second electronic device, the second message in a target area in a conversational interface in response to the target input, where the target area is a display area of a first message in the conversational interface.

According to a fourth aspect, an embodiment of this application provides a message sending apparatus. The apparatus includes a receiving module, a processing module, and a sending module, where the receiving module is configured to receive a first input by a user for a first message, where the first message is M messages sent or unsent by a first electronic device, and M is a positive integer; the processing module is configured to perform first processing on the first message in response to the first input received by the receiving module, to obtain a second message; and the sending module is configured to send, through a server, the second message obtained by the processing module, where in a case that the first message is the M sent messages, the first processing is processing for updating content; or in a case that the first message is the M unsent messages, the first processing is message merging processing.

According to a fifth aspect, an embodiment of this application provides a message sending apparatus. The apparatus includes a receiving module, a processing module, and a sending module, where the receiving module is configured to receive a second message and at least one group identifier that are sent by a first electronic device, where the second message is obtained by merging M messages unsent by the first electronic device, each group identifier is associated with at least one of the M messages, and the at least one group identifier is used to indicate, to a server, an order of forwarding messages in the second message; the processing module is configured to classify the messages in the messages in the second message into at least one message group based on the at least one group identifier; and the sending module is configured to forward the at least one message group to a second electronic device sequentially according to the order indicated by the at least one group identifier.

According to a sixth aspect, an embodiment of this application provides a message sending apparatus. The apparatus includes a receiving module and a display module, where the receiving module is configured to receive a second message forwarded by a server, where the second message is a message obtained by a first electronic device by updating content of M messages sent by the first electronic device; the display module is configured to display prompt information, where the prompt information is used to prompt a user that the M messages have been updated; the receiving module is further configured to receive a target input by the user for the prompt information; and the display module is further configured to display the second message in a target area in a conversational interface in response to the target input received by the receiving module, where the target area is a display area of a first message in the conversational interface.

According to a seventh aspect, an embodiment of this application provides an electronic device. The electronic device includes a processor, a memory, and a program or instructions stored in the memory and executable g on the processor. When the program or instructions are executed by the processor, the steps of the method according to the first aspect or the third aspect are implemented.

According to an eighth aspect, an embodiment of this application provides a network-side device. The network-side device includes a processor, a memory, and a program or instructions stored in the memory and executable on the processor. When the program or instructions are executed by the processor, the steps of the method according to the second aspect are implemented.

According to a ninth aspect, an embodiment of this application provides a readable storage medium. The readable storage medium stores a program or instructions. When the program or instructions are executed by a processor, the steps of the method according to the first aspect, the second aspect, or the third aspect are implemented.

According to a tenth aspect, an embodiment of this application provides a chip. The chip includes a processor and a communication interface. The communication interface is coupled to the processor. The processor is configured to run a program or instructions to implement the method according to the first aspect, the second aspect, or the third aspect.

According to an eleventh aspect, an embodiment of this application provides a computer program product. The program product is stored in a storage medium. The program product is executed by at least one processor to implement the method according to the first aspect, the second aspect, or the third aspect.

In the embodiments of this application, a first electronic device may receive a first input by a user for a first message, where the first message is M messages sent or unsent by the first electronic device, and M is a positive integer; the first electronic device performs first processing on the first message in response to the first input, to obtain a second message; and the first electronic device sends the second message through a server, where in a case that the first message is the M sent messages, the first processing is processing for updating content; or in a case that the first message is the M unsent messages, the first processing is message merging processing. According to this solution, because the user can trigger the first electronic device to merge the M unsent messages or update content of the M sent messages, finally obtain the second message, and send the second message through the server, without sending a plurality of messages for a plurality of times or reentering the content of the sent messages, flexibility of message sending by the electronic device can be improved, and the user can flexibly control a layout of the plurality of messages.

### BRIEF DESCRIPTION OF DRAWINGS

FIG. 1 is a schematic diagram of a message sending method according to an embodiment of this application;
FIG. 2 is a first schematic diagram of an application interface in a message sending method according to an embodiment of this application;
FIG. 3 is a second schematic diagram of an application interface in a message sending method according to an embodiment of this application;
FIG. 4 is a third schematic diagram of an application interface in a message sending method according to an embodiment of this application;
FIG. 5 is a first schematic diagram of a message sending apparatus according to an embodiment of this application;
FIG. 6 is a second schematic diagram of a message sending apparatus according to an embodiment of this application;
FIG. 7 is a third schematic diagram of a message sending apparatus according to an embodiment of this application;
FIG. 8 is a schematic diagram of an electronic device according to an embodiment of this application;
FIG. 9 is a schematic diagram of hardware of an electronic device according to an embodiment of this application; and
FIG. 10 is a schematic diagram of hardware of a server according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, the term "and/or" in the specification and claims indicates at least one of connected objects, and the character "/" generally represents an "or" relationship between associated objects.

A message sending method and apparatus, and an electronic device provided in the embodiments of this application are hereinafter described in detail by using specific embodiments and application scenarios thereof with reference to the accompanying drawings.

Optionally, the message sending method provided in the embodiments of this application may be applied to a message sending scenario.

For example, if a user needs to send a plurality of messages, the user may trigger, based on a first input for these messages, a first electronic device to merge messages having more content to obtain a second message, and send the second message through a server. Because there is no need to send these messages for a plurality of times, interspersion of other messages between these messages can be avoided. Therefore, it can be ensured that a layout of these messages is not changed, and flexibility of the message sending mode can be improved.

For another example, when a user needs to supplement or delete content of at least one sent message, the user may trigger, based on an input for the at least one message, an electronic device to add or delete content on a basis of the at least one message, and send the message with updated content through a server. Because there is no need to reenter the content of the at least one message, the message update operation process can be simplified, and flexibility of the message sending mode can be improved.

### Embodiment 1

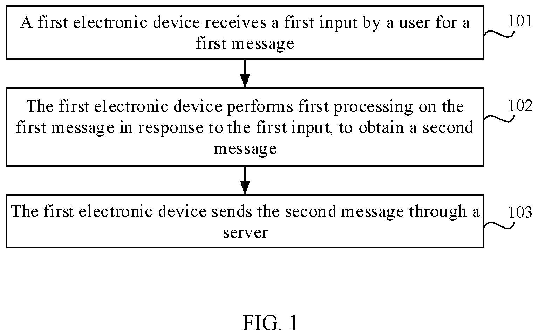

With reference to FIG. 1, this embodiment of this application provides a message sending method. The method may include the following step 101 to step 103. For illustrative description, the following uses an example in which a first electronic device performs the method.

Step 101: A first electronic device receives a first input by a user for a first message.

The first message may be M messages sent or unsent by the first electronic device, and M may be a positive integer.

Optionally, in this embodiment of this application, the first input may be a touch input, a floating input, a preset gesture input, or a voice input, which may be specifically determined based on an actual use requirement.

Optionally, in this embodiment of this application, the first message may be a message in a conversational interface, where the conversational interface may be a conversational interface between the user and a contact or a conversational interface between the user and a group, and is not limited in this embodiment of this application.

Optionally, in this embodiment of this application, the M sent messages may be M messages sent by the first electronic device or M messages sent by devices of other users; or the M sent messages may include both messages sent by the first electronic device and messages sent by devices of other users. This is not limited in this embodiment of this application.

Optionally, each message (for example, a sent message and an unsent message) in this embodiment of this application may include at least one type of content, and each type of content may be any one of the following: text content, picture content, video content, voice content, and the like. This is not limited in this embodiment of this application.

Step 102: The first electronic device performs first processing on the first message in response to the first input, to obtain a second message.

In a case that the first message is the M sent messages, the first processing is processing for updating content; or in a case that the first message is the M unsent messages, the first processing is message merging processing.

Optionally, in this embodiment of this application, updating content may be adding content or deleting content, or may be adding content after deleting a part of content, which may be specifically determined based on an actual use requirement, and is not limited in this embodiment of this application.

Optionally, in this embodiment of this application, the electronic device may add at least one of the following types of content: text content, picture content, video content, and voice content.

Optionally, in this embodiment of this application, the electronic device may add one type of content, such as text content or picture content, so that different types of content can be prevented from being mixed with each other, and that message reading experience can be improved.

Optionally, in this embodiment of this application, a quantity of second messages may be the same as or different from a quantity of first messages, which may be specifically determined based on an actual use requirement, and is not limited in this embodiment of this application.

For example, the first message is five messages and the second message is one message.

Step 103: The first electronic device sends the second message through a server.

In this embodiment of this application, the server is a server corresponding to an application program to which the conversational interface belongs.

Optionally, in this embodiment of this application, after the first electronic device sends the second message through the server, the other users (specifically, the devices of the other users, hereinafter referred to as second electronic devices) in the conversational interface can receive the second message.

In this embodiment of this application, the first electronic device may first send the second message to the server, and after the server receives the second message, the server may deliver the second message to a second electronic device. For example, assuming that the conversational interface is a conversational interface between the user and a contact 1, the server may deliver the second message to a device of the contact 1 after receiving the second message, so that the second electronic device and the first electronic device can update messages in their conversational interfaces.

In the message sending method provided in this embodiment of this application, the user can trigger the first electronic device to merge the unsent messages or update the content of the sent messages, finally obtain the second message, and send the second message through the server. Therefore, on one hand, because there is no need to send these messages for a plurality of times, interspersion of other messages between these messages can be avoided, and it can be ensured that a layout of these messages is not changed; on the other hand, because there is no need to reenter the content of the message, the message update operation process can be simplified, and flexibility of message sending can be improved.

Optionally, in this embodiment of this application, after obtaining the second message and before sending the second message through the server, the first electronic device may display the second message in an input box or a preview box in the conversational interface. If the second message is displayed in the input box in the conversational interface, the user may trigger the first electronic device to display all content of the second message by performing an input on a "zoom in" control in the conversational interface, so that the user views and sorts the second message conveniently.

Optionally, an association relationship between the first message and the second message may be established, so that tapping the second message may cause a jump to an area in which the first message is located to display the first message.

Optionally, in this embodiment of this application, the first message is the M sent messages; and after the foregoing step 102, the message sending method provided in this embodiment of this application may further include the following step 104.

Step 104: The first electronic device sends indication information to the server.

The indication information may be used to indicate either of the following: (1) the server deleting the first message in the server, and (2) the server replacing the first message in the server with the second message.

Optionally, in this embodiment of this application, the indication information may include an identity information ID (Identity Document, ID) of the first message, a package name, and the like, so that the server can accurately delete the first message or replace the first message with the second message.

It should be noted that in this embodiment of this application, after the server replaces the first message in the server with the second message, the first message can be deleted.

For ease of description, the devices of the other users in the conversational interface are collectively referred to as second electronic devices. The two terms have the same meaning and can be interchanged.

Optionally, in this embodiment of this application, after the server deletes the first message in the server, the first electronic device may cancel displaying of the first message in the conversational interface, and the second electronic device may cancel displaying of the first message in the conversational interface of the second electronic device. In other words, all users in the conversational interface will not see the first message.

Optionally, in this embodiment of this application, after the server deletes the first message in the server, the first electronic device sends the second message through the server, and specifically, the server sends the second message in a form of a new message.

In this embodiment of this application, the electronic device may perform step 103 before performing step 104, or the electronic device may perform step 104 before performing step 103, or the electronic device may perform step 103 and step 104 simultaneously. This may be specifically determined based on an actual use requirement, and is not limited in this embodiment of this application.

In this embodiment of this application, when the first message is the M sent messages, because the first electronic device can send, to the server after updating the content of the first message and obtaining the second message, the indication information used to indicate the server to delete the first message in the server or indicate the server to replace the first message in the server with the second message, presence of a plurality of pieces of content related to the first message in the conversational interface (for example, the conversational interface in the first electronic device and the conversational interface in the second electronic device) can be avoided. Therefore, flexibility of message displaying can be improved.

Optionally, in this embodiment of this application, in the foregoing (2), the indication information is used to indicate the server to replace the first message in the server with the second message; and after the foregoing step 104, the message sending method provided in this embodiment of this application may further include the following step 105.

Step 105: The first electronic device displays the second message in a first area in the conversational interface.

The first area may be a display area of the first message in the conversational interface, where display forms of first content and second content in the second message are different, the first content may be content in the first message, and the second content may be content in the second message that is different from the first content.

Optionally, in this embodiment of this application, that the first electronic device displays the second message in a first area of the conversational interface may be understood as "the first electronic device cancels displaying of the first message in the first area and displays the second message in the first area".

Optionally, in this embodiment of this application, different display forms may include: different display colors, different display sizes, different background colors, and the like. This is not limited in this embodiment of this application.

Optionally, in this embodiment of this application, the display form of the second content is more prominent and eye-catching than the display form of the first content, to draw more attention of the user.

For example, assuming that both the first content and the second content are text content, a color of the first content may be black and a color of the second content may be red.

Optionally, in this embodiment of this application, the second content may include at least one of the following: text content, picture content, video content, and voice content.

It should be noted that in this embodiment of this application, assuming that the second electronic device displays the first message in a third position of the conversational interface, after the server replaces the first message in the server with the second message, the second electronic device may also cancel displaying of the first message in the third position and display the second message in the third position. In addition, the second electronic device displays the first content and the second content in the same display form as the first electronic device displays the first content and the second content.

Optionally, in this embodiment of this application, the first electronic device may further display first prompt information in the area in which the second message is located, where the first prompt information may indicate which content in the second message is updated content.

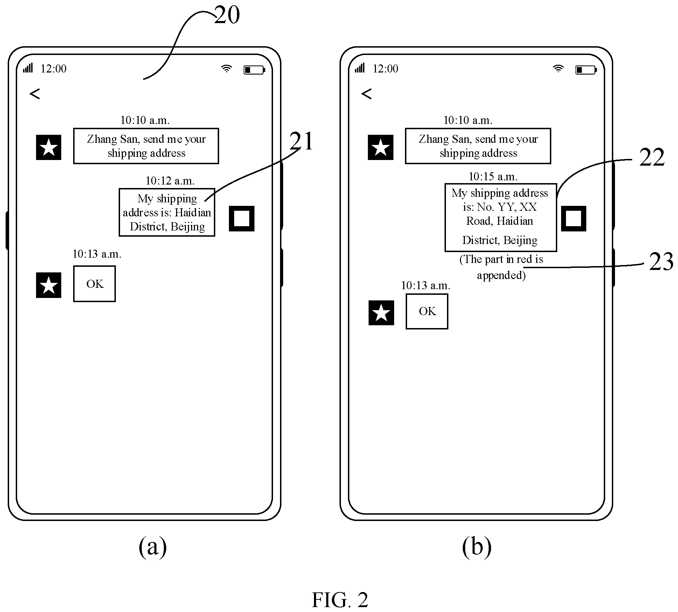

For example, as shown in FIG. 2(a), in the conversational interface 20, the first message 21 is "My shipping address is: Haidian District, Beijing", and the user may enter added (that is, updated) content for the first message 21 (that is, the first input); therefore, the first electronic device may add "No. YY, XX Road" to the first message 21 in response to the first input, to obtain the second message 22: "My shipping address is: No. YY, XX Road, Haidian District, Beijing", and then the first electronic device may send the second message 22 and indication information through the server, where the indication information is used to indicate the server to replace the first message in the server with the second message; and then, as shown in FIG. 2(b), the first electronic device may display the second message in the position of the first message, and display prompt information 23 (the first prompt information): "The part in red is appended" below the second message, where the display color of "My shipping address is: Haidian District, Beijing" in the second message is black, and the display color of "No. YY, XX Road" in the second message is red.

Optionally, in this embodiment of this application, the second electronic device may also display the first prompt information in the area in which the second message is displayed in the second electronic device.

Optionally, in this embodiment of this application, the first electronic device may instruct the server to update a sending time of the first message to a sending time of the second message. In this way, each device (including the first electronic device and the second electronic device) can display the updated time on its conversational interface, and a display area of the updated time is adjacent to the display area of the second message.

For example, as shown in FIG. 2(a), the sending time of the first message is 10: 12 am; assuming that the first electronic device sends the second message to the server at 10: 15, after the server replaces the first message in the server with the second message, as shown in FIG. 2(b), the first electronic device may display the second message in the display area of the first message and update the sending time of the first message to 10: 15.

In this embodiment of this application, because the first electronic device can display the second message in the position in which the first message is originally displayed, and display different content of the original first message in different display forms in the second message, the user can conveniently view which content is updated. Therefore, flexibility of message displaying can be improved.

Optionally, in this embodiment of this application, assuming that the first message is the M sent messages, before the foregoing step 101, the message sending method provided in this embodiment of this application may further include the following step 106 and step 107.

Step 106: The first electronic device receives a second input by the user in the conversational interface.

Step 107: In response to the second input, the first electronic device displays a message editing box in the conversational interface, displays the first message in the message editing box, and displays an input method interface corresponding to the message editing box.

The second input may be an input for selecting the first message from the conversational interface by the user.

Optionally, in this embodiment of this application, the second input may be a touch input, a floating input, a preset gesture input, or a voice input, which may be specifically determined based on an actual use requirement.

Optionally, in this embodiment of this application, the second input may include a first sub-input and a second sub-input.

The first sub-input is an input by the user for the first message, the first sub-input is used to trigger the first electronic device to display a target control, the target control is used to trigger a function of processing for updating content for message, and the second sub-input is an input for the target control.

Optionally, in this embodiment of this application, after receiving the first sub-input by the user for the first message, the first electronic device may display the target control, or may display the target control and at least one first control, where each first control is used to trigger any one of the following: deleting a local message of the first electronic device, recalling a message, forwarding a message, and adding a message to favorites. Then through the second sub-input for the target control, the user may trigger the first electronic device to display the message editing box in the conversational interface, display the first message in the message editing box, and display the input method interface corresponding to the message editing box.

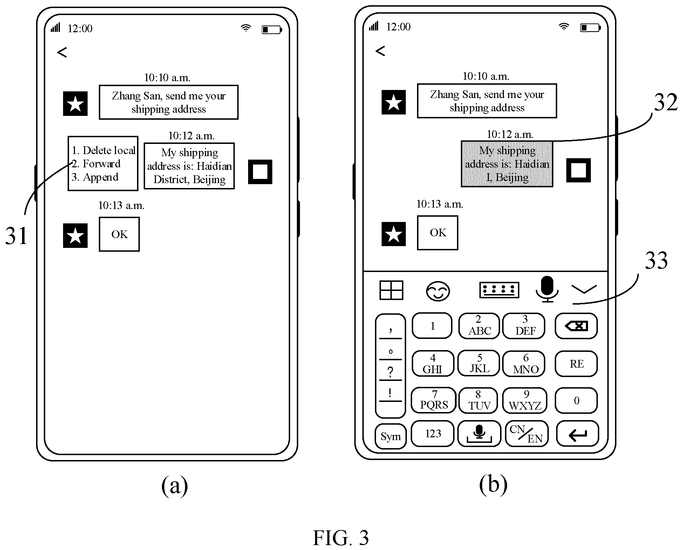

For example, as shown in FIG. 2(a), the first electronic device displays the sent message 21 (that is, the first message) in the conversational interface, and the user may press and hold the message 21 (that is, the first sub-input). As shown in FIG. 3(a), the first electronic device may display a control list 31, where the control list includes an "append" control (that is, the target control), a "delete local" control, and a "forward" control (that is, at least one first control). Then the user may tap the "append" control (that is, the second sub-input). Therefore, the first electronic device can display the message editing box in the conversational interface, display the first message in the message editing box, and display the input method interface corresponding to the message editing box, as shown in FIG. 3(b). Therefore, the user can trigger the first electronic device to add content to the message 21 through the input (that is, the first input) on the input method interface.

In this embodiment of this application, because the user can trigger the first electronic device to edit the sent message again, flexibility of processing the sent message can be improved.

Optionally, in this embodiment of this application, assuming that the first message is the M unsent messages, before the foregoing step 101, in a case that the first electronic device is in a message preview mode, the message sending method provided in this embodiment of this application may further include the following step 108 and step 109.

Step 108: The first electronic device receives a third input by the user for N unsent messages.

Step 109: The first electronic device displays the N messages in the conversational interface in the preview mode in response to the third input, without sending the N messages, where the M unsent messages are messages among the N messages.

The third input may be an input for previewing the N messages; and the first input may be specifically an input for selecting the M messages from the N messages by the user.

Optionally, in this embodiment of this application, a display form of the N messages is the same as a display form of the N messages in the conversational interface after the first electronic device sends the N messages through the server. In this way, the user can conveniently preview a display effect after the N messages are sent.

Optionally, in this embodiment of this application, the N messages may be messages that the user triggers the first electronic device to send (that is, preview) in a target chat mode. In the target chat mode, when the user triggers the first electronic device to send a message through the conversational interface, the first electronic device may display the message in the conversational interface in the preview mode, and the message is not sent through the server, that is, the other users in the conversational interface will not receive the message, but the user can normally receive messages sent by the other users.

Optionally, in this embodiment of this application, the user may trigger the first electronic device to start the target chat mode before performing the third input, or if the conversational interface is a group conversational interface, the user may trigger the first electronic device to request an administrator in the group to start the target chat mode, and with consent of the administrator, start the target chat mode. This may be specifically determined based on an actual use requirement.

Optionally, in this embodiment of this application, an input form of the third input may be the same as an input form in which the user triggers the electronic device to send a message in a normal mode. For example, the third input may be an input by the user for a "send" control.

Optionally, in this embodiment of this application, the third input may be a touch input, a floating input, a preset gesture input, or a voice input, which may be specifically determined based on an actual use requirement.

Optionally, in this embodiment of this application, the third input includes N third sub-inputs, and each third sub-input is used to preview one of the N messages. In actual implementation, for an i^{th} message among the N messages, after editing/entering the i^{th} message, the user may trigger, through an i^{th} third sub-input, the first electronic device to display the i^{th} message in the conversational interface; and then the user may continue editing/entering an (i+1)^{th} message, and after editing/entering the (i+1)^{th} message, trigger, through an (i+1)^{th} third sub-input, the first electronic device to display the (i+1)^{th} message in the conversational interface, and so on, until the first electronic device displays an N^{th} message in the conversational interface, where i is a positive integer.

With reference to accompanying drawings, the following illustratively describes the message sending method provided in this embodiment of this application.

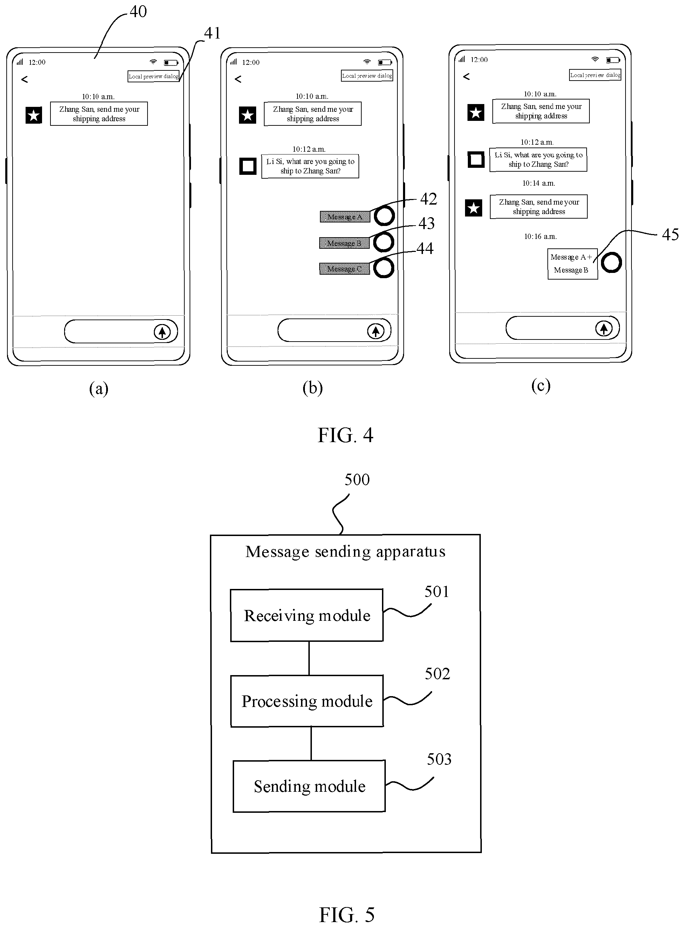

For example, as shown in FIG. 4(a), the conversational interface 40 may include a "local preview dialog" control 41. The user may perform an input on the control to trigger the first electronic device to start the target chat mode; and then the user may sequentially perform inputs and trigger the first electronic device to preview message A, message B, and message C, so that the first electronic device can display message A42, message B43, and message C44 in the conversational interface respectively as shown in FIG. 4(b). It may be understood that the third input includes three third sub-inputs, which are used to preview message A, message B, and message C respectively. Because the user can trigger the first electronic device to preview a plurality of messages, a problem that the user cannot view all input messages in an input box due to too much content entered at a time can be avoided.

In this embodiment of this application, because the user can trigger the first electronic device to display the N messages in the conversational interface in the preview mode, and the N messages are not sent to the devices of the other users through the server, diversity of message processing can be improved.

Optionally, when the first electronic device is in the message preview mode, the first electronic device can still receive messages sent by other devices, and display the messages in the conversational interface.

Optionally, in this embodiment of this application, after the foregoing step 109, the message sending method provided in this embodiment of this application may further include the following step 110 and step 111.

Step 110: The first electronic device receives a fourth input by the user.

Optionally, in this embodiment of this application, the fourth input may be a touch input, a floating input, a preset gesture input, or a voice input, which may be specifically determined based on an actual use requirement.

Step 111: In response to the fourth input, the first electronic device performs second processing corresponding to the fourth input, where the second processing includes at least one of the following: adjusting an arrangement order of the N messages and updating content of at least one of the N messages.

In a case that the second processing includes adjusting the arrangement order of the N messages, an arrangement order of the M unsent messages in the second message is the same as an arrangement order of the M unsent messages among the N messages.

Optionally, in this embodiment of this application, the user may trigger, by an input for dragging one or more of the N messages (that is, the fourth input), the electronic device to adjust the arrangement order of the N messages.

Optionally, in this embodiment of this application, when the at least one message includes a plurality of messages, the fourth input includes a plurality of fourth sub-inputs, and each fourth sub-input is used to update content in one of the plurality of messages.

Specifically, for each of the at least one message, the user may select a message, and then update the content in the message through a fourth sub-input (such as deleting content, adding content, and adjusting a content format).

In this embodiment of this application, because the user can trigger the first electronic device to readjust the arrangement order of the N messages or update content of the message in the at least one message, flexibility of message preview processing can be improved.

Optionally, in this embodiment of this application, the first message is the M unsent messages; and before the foregoing step 103, the message sending method provided in this embodiment of this application may further include the following step 112, and the foregoing step 103 may be specifically implemented by the following step 103a.

Step 112: The first electronic device classifies the M unsent messages into at least one message group.

Each message group may include at least one message among the M unsent messages, and messages in a same message group may be associated with a same group identifier.

Optionally, in this embodiment of this application, the first electronic device can classify the M unsent messages into at least one message group under the trigger of the user; or the first electronic device can automatically classify the M unsent messages into at least one message group based on pictures or videos, which may be specifically determined based on an actual use requirement, and is not limited in this embodiment of this application.

For example, the M messages include message 1, message 2, message 3, and message 4, where message 1 is a picture message, message 2 is a text message corresponding to message 1, message 3 is a picture message, and message 4 is a text message corresponding to message 3; in this case, the electronic device may classify message 1 and message 2 into one group and message 3 and message 4 into one group.

Optionally, in this embodiment of this application, when a message group includes a plurality of types of messages, parts having an association relationship in different types of messages may be associated.

For example, a group message includes a picture message and a text message. If a part of the picture is marked with yellow, a text that is in the text message and that is associated with the part is also displayed in yellow.

Step 103a: The first electronic device sends the second message and at least one group identifier to the server.

The at least one group identifier may be used to indicate, to the server, an order of forwarding messages in the second message.

Optionally, in this embodiment of this application, the first electronic device may further compress the M unsent messages into a target compressed file in response to an input by the user, and send the target compressed file through the server.

In this embodiment of this application, because the first electronic device can classify the M unsent messages into at least one message group and instruct the server to forward the M messages according to the group identifier in the message group, flexibility of processing the unsent messages can be improved.

With reference to accompanying drawings, the following illustratively describes the message sending method provided in this embodiment of this application.

When the first message is the M sent messages, as shown in FIG. 2(a), the first electronic device displays the first message 21 "My shipping address is: Haidian District, Beijing" in the conversational interface 20, and the user may perform a press-and-hold input (that is, the first sub-input) on the first message 21. As shown in FIG. 3(a), the first electronic device may display the control list 31, where the control list includes the "append" control (that is, the target control), the "delete local" control, and the "forward" control (that is, at least one first control). Then the user may tap the "append" control (that is, the second sub-input). Therefore, the first electronic device can display the message editing box 32 in the conversational interface, display the first message in the message editing box 32, and display the input method interface 33 corresponding to the message editing box 32, as shown in FIG. 3(b). Therefore, the user can trigger, through the input (that is, the first input) on the input method interface 33, the first electronic device to add content to the message 21 to obtain the second message. The user may tap the "send" control. As shown in FIG. 2(b), the first electronic device sends the second message 22 through the server, cancels displaying of the first message, displays the second message in the area in which the first message is displayed, and displays prompt information 23 (the first prompt information): "The part in red is appended" below the second message, where the display color of "My shipping address is: Haidian District, Beijing" in the second message 22 is black, and the display color of "No. YY, XX Road" in the second message is red; and the sending time of the first message is updated to 10:15.

When the first message is the M unsent messages, as shown in FIG. 4(a), the first electronic device displays the "local preview dialog" control 41 in the conversational interface 40, The user may perform a tap input on the control 41 to trigger the first electronic device to start the target chat mode, and the user may perform a preview input (that is, the third input) on the conversational interface to preview three messages (that is, the N messages). As shown in FIG. 4(b), the first electronic device may display three message preview boxes in the conversational interface, and the user may select message A and message B (that is, the first input). As shown in FIG. 4(c), the first electronic device is triggered to obtain message 45 (that is, the second message), message 45 is sent through the server, and message 45 is displayed in the conversational interface.

### Embodiment 2

This embodiment of this application provides a message sending method. The method may include the following step 201 and step 202. For illustrative description, the following uses an example in which a server performs the method.

Step 201: A server receives a second message and at least one group identifier that are sent by a first electronic device.

The second message may be obtained by merging M messages unsent by the first electronic device, each group identifier may be associated with at least one of the M messages, and the at least one group identifier may be used to indicate, to the server, an order of forwarding messages in the second message.

Step 202: The server classifies the messages in the second message into at least one message group based on the at least one group identifier, and forwards the at least one message group to a second electronic device sequentially according to the order indicated by the at least one group identifier. Optionally, in this embodiment of this application, after receiving a target compressed file sent by the first electronic device, the server may send the target compressed file to the second electronic device.

In the message sending method provided in this embodiment of this application, because the server can classify the messages in the second message into at least one message group based on the received second message and at least one group identifier that are sent by the first electronic device, and forward the at least one message group to the second electronic device sequentially according to the order indicated by the at least one group identifier. Therefore, flexibility of message sending can be improved.

### Embodiment 3

This embodiment of this application provides a message sending method. The method may include the following step 301 to step 304. For illustrative description, the following uses an example in which a second electronic device performs the method.

Step 301: A second electronic device receives a second message forwarded by a server.

The second message may be a message obtained by a first electronic device by updating content of M messages sent by the first electronic device.

For example, the second message may be one message.

Step 302: The second electronic device displays prompt information.

The prompt information may be used to prompt a user that the M messages have been updated.

Optionally, in this embodiment of this application, the prompt information may further include all or a part of content of the second message.

Step 303: The second electronic device receives a target input by the user for the prompt information.

Optionally, in this embodiment of this application, the target input may be a touch input, a floating input, a preset gesture input, or a voice input, which may be specifically determined based on an actual use requirement.

Step 304: The second electronic device displays the second message in a target area in a conversational interface in response to the target input.

The target area is a display area of a first message in the conversational interface.

Optionally, in this embodiment of this application, after receiving a target compressed file forwarded by the server, the second electronic device decompresses the target compressed file to obtain the second message.

In the message sending method provided in this embodiment of this application, after receiving the second message, the second electronic device may further display the prompt information; and display the second message in the display area of the first message in the conversational interface in response to the target input by the user for the prompt information. Therefore, flexibility of message sending can be improved.

It should be noted that the message sending method provided in this embodiment of this application may be performed by a message sending apparatus or a control module for performing the message sending method in the message sending apparatus. A message sending apparatus provided in an embodiment of this application is described by assuming that the message sending method in this embodiment of this application is performed by the message sending apparatus.

With reference to FIG. 5, an embodiment of this application provides a message sending apparatus 500. The message sending apparatus 500 may include a receiving module 501, a processing module 502, and a sending module 503. The receiving module 501 may be configured to receive a first input by a user for a first message, where the first message is M messages sent or unsent by a first electronic device, and M is a positive integer; the processing module 502 may be configured to perform first processing on the first message in response to the first input received by the receiving module 501, to obtain a second message; and the sending module 503 may be configured to send, through a server, the second message obtained by the processing module 502, where in a case that the first message is the M sent messages, the first processing is processing for updating message; or in a case that the first message is the M unsent messages, the first processing is message merging processing.

Optionally, in this embodiment of this application, the first message is the M sent messages; and after the processing module 502 performs the first processing on the first message in response to the first input, to obtain the second message, the sending module 503 may be further configured to send indication information to the server, where the indication information is used to indicate either of the following: the server deleting the first message in the server, and the server replacing the first message in the server with the second message.

Optionally, in this embodiment of this application, the apparatus further includes a display module, and the indication information is used to indicate the server to replace the first message in the server with the second message; and after the sending module 503 sends the indication information to the server, the display module is configured to display the second message in a first area in a conversational interface, where the first area is a display area of the first message in the conversational interface, where display forms of first content and second content in the second message are different, the first content is content in the first message, and the second content is content in the second message that is different from the first content.

Optionally, in this embodiment of this application, the first message is the M sent messages; before receiving the first input by the user for the first message, the receiving module 501 is further configured to receive a second input by the user in the conversational interface, where the second input is an input for selecting the first message; and the display module is further configured to: in response to the second input received by the receiving module 501, display a message editing box in the conversational interface, display the first message in the message editing box, and display an input method interface corresponding to the message editing box, where the first input is specifically an input of content entered by the user through the input method interface.

Optionally, in this embodiment of this application, the first message is the M unsent messages, and the apparatus further includes a display module; before receiving the first input by the user for the first message, the receiving module 501 is further configured to: in a case that the first electronic device is in a message preview mode, receive a third input by the user for N unsent messages; and the display module is configured to display the N messages in the conversational interface in the preview mode in response to the third input received by the receiving module 501, without sending the N messages, where the M unsent messages are messages among the N messages.

Optionally, in this embodiment of this application, after the N messages are displayed in the conversational interface in the preview mode, the receiving module 501 is further configured to receive a fourth input by the user; and the processing module 502 is further configured to: in response to the fourth input received by the receiving module 501, perform second processing corresponding to the fourth input, where the second processing includes at least one of the following: adjusting an arrangement order of the N messages and updating content of at least one of the N messages.

Optionally, in this embodiment of this application, the first message is the M unsent messages; the processing module 502 is further configured to classify the M unsent messages into at least one message group, where each message group includes at least one message among the M unsent messages, and messages in a same message group are associated with a same group identifier; and the sending module 503 is specifically configured to send the second message and at least one group identifier to the server, where the at least one group identifier is used to indicate, to the server, an order of forwarding messages in the second message.

In this embodiment of this application, the user can trigger the message sending apparatus to merge the unsent messages or update the content of the sent messages, finally obtain the second message, and send the second message through the server. Therefore, on one hand, because there is no need to send these messages for a plurality of times, interspersion of other messages between these messages can be avoided, and it can be ensured that a layout of these messages is not changed; on the other hand, because there is no need to reenter the content of the message, the message update operation process can be simplified, and flexibility of message sending can be improved.

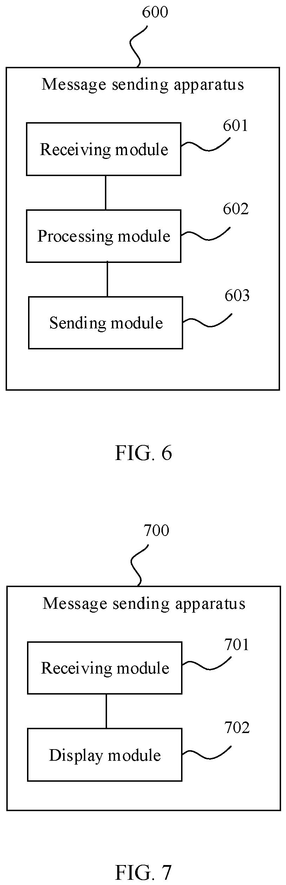

With reference to FIG. 6, an embodiment of this application provides a message sending apparatus 600. The message sending apparatus may include a receiving module 601, a processing module 602, and a sending module 603. The receiving module 601 is configured to receive a second message and at least one group identifier that are sent by a first electronic device, where the second message is obtained by merging M messages unsent by the first electronic device, each group identifier is associated with at least one of the M messages, and the at least one group identifier is used to indicate, to a server, an order of forwarding messages in the second message; the processing module 602 is configured to classify the messages in the second message into at least one message group based on the at least one group identifier; and the sending module 603 is configured to forward the at least one message group to a second electronic device sequentially according to the order indicated by the at least one group identifier.

In this embodiment of this application, because the message sending apparatus can classify the messages in the second message into at least one message group based on the received second message and at least one group identifier that are sent by the first electronic device, and forward the at least one message group to the second electronic device sequentially according to the order indicated by the at least one group identifier. Therefore, flexibility of message sending can be improved.

With reference to FIG. 7, an embodiment of this application provides a message sending apparatus 700. The message sending apparatus may include a receiving module 701 and a display module 702. The receiving module 701 is configured to receive a second message forwarded by a server, where the second message is a message obtained by a first electronic device by updating content of M messages sent by the first electronic device; the display module 702 is configured to display prompt information, where the prompt information is used to prompt a user that the M messages have been updated; the receiving module 701 is further configured to receive a target input by the user for the prompt information; and the display module 702 is further configured to display the second message in a target area in a conversational interface in response to the target input received by the receiving module, where the target area is a display area of a first message in the conversational interface.

In this embodiment of this application, after receiving the second message, the message sending apparatus may further display the prompt information and display the second message in the display area of the first message in the conversational interface in response to the target input by the user for the prompt information. Therefore, flexibility of message sending can be improved.

For beneficial effects of various implementations in this embodiment, refer to the beneficial effects of the corresponding implementations in the foregoing method embodiment. To avoid repetition, details are not described herein again.

The message sending apparatus in this embodiment of this application may be a terminal, or may be a component, an integrated circuit, or a chip in a terminal. The apparatus may be a mobile electronic device, or may be a nonmobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The nonmobile electronic device may be a server, a network attached storage (Network Attached Storage, NAS), a personal computer (personal computer, PC), a television (television, TV), a teller machine, a self-service machine, or the like. This is not specifically limited in this embodiment of this application.

The message sending apparatus in this embodiment of this application may be an apparatus having an operating system. The operating system may be an Android (Android) operating system, an iOS operating system, or other possible operating systems, and is not specifically limited in this embodiment of this application.

The message sending apparatus provided in this embodiment of this application is capable of implementing each process in the method embodiment implemented in FIG. 1. To avoid repetition, details are not described herein again.

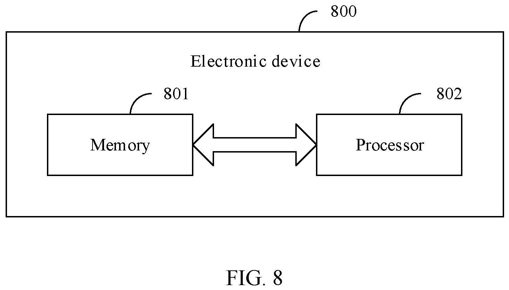

As shown in FIG. 8, an embodiment of this application further provides an electronic device 800, including a processor 802, a memory 801, and a program or instructions stored in the memory 801 and executable on the processor 802. When the program or instructions are executed by the processor 802, each process of the foregoing embodiment of the message sending method is implemented, with the same technical effect achieved. To avoid repetition, details are not described herein again.

It should be noted that electronic devices in this embodiment of this application include the foregoing mobile electronic device and a nonmobile electronic device.

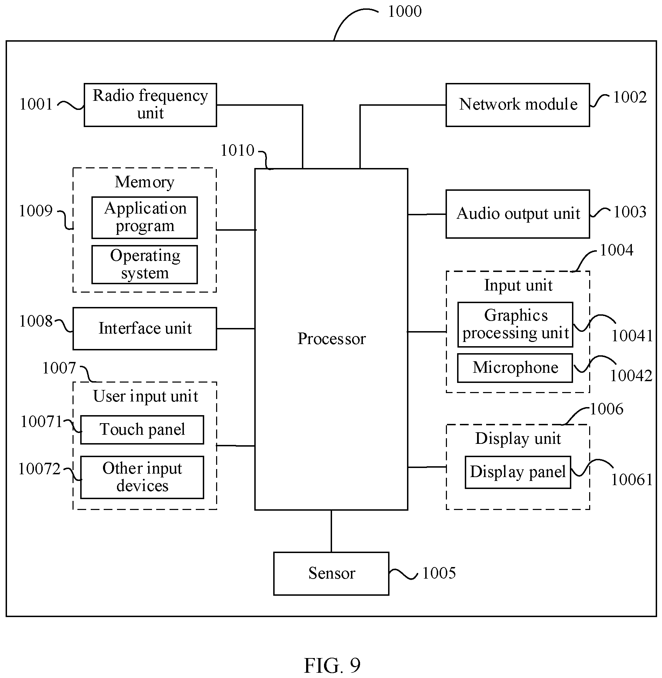

FIG. 9 is a schematic diagram of a hardware structure of an electronic device for implementing an embodiment of this application.

The electronic device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the electronic device 1000 may further include a power supply (such as a battery) for supplying power to the components. The power supply may be logically connected to the processor 1010 through a power management system. In this way, functions such as charge management, discharge management, and power consumption management are implemented by using the power management system. The structure of the electronic device shown in FIG. 9 does not constitute a limitation on the electronic device. The electronic device may include more or fewer components than those shown in the figure, or some components are combined, or component arrangements are different. Details are not described herein again.

In a case that the electronic device 1000 is the first electronic device in Embodiment 1,
the user input unit 1007 may be configured to receive a first input by a user for a first message, where the first message is M messages sent or unsent by the first electronic device, and M is a positive integer; the processor 1010 may be configured to perform first processing on the first message in response to the first input received by the user input unit 1007, to obtain a second message; and the processor 1010 may be further configured to send, through a server, the second message obtained by the processor 1010, where in a case that the first message is the M sent messages, the first processing is processing for updating message; or in a case that the first message is the M unsent messages, the first processing is message merging processing.

Optionally, in this embodiment of this application, the first message is the M sent messages; and after the processor 1010 performs the first processing on the first message in response to the first input, to obtain the second message, the processor 1010 may be further configured to send indication information to the server, where the indication information is used to indicate either of the following: the server deleting the first message in the server, and the server replacing the first message in the server with the second message.

Optionally, in this embodiment of this application, the electronic device further includes the display unit 1006, and the indication information is used to indicate the server to replace the first message in the server with the second message; and after the processor 1010 sends the indication information to the server, the display unit 1006 is configured to display the second message in a first area in a conversational interface, where the first area is a display area of the first message in the conversational interface, where display forms of first content and second content in the second message are different, the first content is content in the first message, and the second content is content in the second message that is different from the first content.

Optionally, in this embodiment of this application, the first message is the M sent messages; before receiving the first input by the user for the first message in the conversational interface, the user input unit 1007 is further configured to receive a second input by the user in the conversational interface, where the second input is an input for selecting the first message; and the display unit 1006 is further configured to: in response to the second input received by the user input unit 1007, display a message editing box in the conversational interface, display the first message in the message editing box, and display an input method interface corresponding to the message editing box, where the first input is specifically an input of content entered by the user through the input method interface.

Optionally, in this embodiment of this application, the first message is the M unsent messages, and the electronic device further includes the display unit 1006; before receiving the first input by the user for the first message in the conversational interface, the user input unit 1007 is further configured to: in a case that the first electronic device is in a message preview mode, receive a third input by the user for N unsent messages; and the display unit 1006 is configured to display the N messages in the conversational interface in the preview mode in response to the third input received by the user input unit 1007, without sending the N messages, where the M unsent messages are messages among the N messages.

Optionally, in this embodiment of this application, after the display unit 1006 displays the N messages in the conversational interface in the preview mode, the user input unit 1007 is further configured to receive a fourth input by the user; and the processor 1010 is further configured to: in response to the fourth input received by the user input unit 1007, perform second processing corresponding to the fourth input, where the second processing includes at least one of the following: adjusting an arrangement order of the N messages and updating content of at least one of the N messages.

Optionally, in this embodiment of this application, the first message is the M unsent messages; the processor 1010 is further configured to classify the M unsent messages into at least one message group, where each message group includes at least one message among the M unsent messages, and messages in a same message group are associated with a same group identifier; and the processor 1010 is specifically configured to send the second message and at least one group identifier to the server, where the at least one group identifier is used to indicate, to the server, an order of forwarding messages in the second message.

In this embodiment of this application, the user can trigger the electronic device to merge the unsent messages or update the content of the sent messages, finally obtain the second message, and send the second message through the server. Therefore, on one hand, because there is no need to send these messages for a plurality of times, interspersion of other messages between these messages can be avoided, and it can be ensured that a layout of these messages is not changed; on the other hand, because there is no need to reenter the content of the message, the message update operation process can be simplified, and flexibility of message sending can be improved.

In a case that the electronic device 1000 is the second electronic device in Embodiment 3,
the user input unit 1007 is configured to receive a second message forwarded by a server, where the second message is a message obtained by a first electronic device by updating content of M messages sent by the first electronic device; the display unit 1006 is configured to display prompt information, where the prompt information is used to prompt a user that the M messages have been updated; the user input unit 1007 is further configured to receive a target input by the user for the prompt information; and the display unit 1006 is further configured to display the second message in a target area in a conversational interface in response to the target input received by the user input unit 1007, where the target area is a display area of a first message in the conversational interface.

In this embodiment of this application, after receiving the second message, the electronic device may further display the prompt information and display the second message in the display area of the first message in the conversational interface in response to the target input by the user for the prompt information. Therefore, flexibility of message sending can be improved.

For beneficial effects of various implementations in this embodiment, refer to the beneficial effects of the corresponding implementations in the foregoing method embodiment. To avoid repetition, details are not described herein again.

It should be understood that, in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, or the like. The user input unit 1007 includes a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function button (such as a volume control button or a power button), a trackball, a mouse, and a joystick. Details are not described herein again. The memory 1009 may be configured to store a software program and various data, including but not limited to an application program and an operating system. The processor 1010 may integrate an application processor and a modem processor. The application processor mainly processes the operating system, a user interface, an application program, or the like. The modem processor mainly processes wireless communication. It may be understood that the modem processor may alternatively not be integrated in the processor 1010.

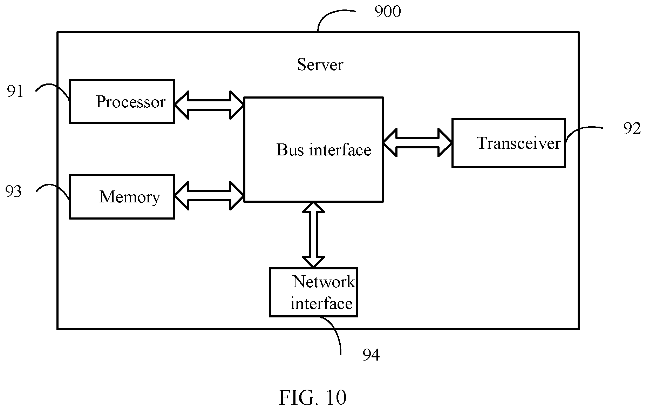

FIG. 10 is a schematic diagram of a hardware structure of a server according to an embodiment of this application.

An embodiment of this application further provides a server. As shown in FIG. 10, the server in this embodiment of this application includes a processor 91, a transceiver 92, a memory 93, a network interface 94, and a bus interface. In FIG. 10, a bus architecture may include any quantity of interconnected buses and bridges, and specifically connects together circuits that are of one or more processors represented by the processor 91 and of a memory represented by the memory 93. The bus architecture may further interconnect various other circuits such as a peripheral device, a voltage regulator, and a power management circuit. These are all well known in the art, and therefore are not further described in this specification. The bus interface provides an interface. The transceiver 92 may be a plurality of components, including a transmitter and a receiver, and provides units for communicating with a variety of other apparatuses on a transmission medium. The processor 91 is responsible for management of the bus architecture and general processing, and the memory 93 is capable of storing data that is used by the processor 91 during operation. In addition, the server further includes some functional modules that are not shown. Details are not described herein.

Specifically, the server further includes a program or instructions stored in the memory 93 and executable on the processor 91. When the processor 91 invokes the program or instructions in the memory 93, the method performed by each module in FIG. 7 is performed, with the same technical effect achieved. To avoid repetition, details are not described herein again.

The transceiver 92 is configured to receive a second message and at least one group identifier that are sent by a first electronic device, where the second message is obtained by merging M messages unsent by the first electronic device, each group identifier is associated with at least one of the M messages, and the at least one group identifier is used to indicate, to a server, an order of forwarding messages in the second message.

Optionally, the processor 91 is configured to classify the messages in the second message into at least one message group based on the at least one group identifier.

Optionally, the transceiver 92 may be further configured to forward the at least one message group to a second electronic device sequentially according to the order indicated by the at least one group identifier.

In this embodiment of this application, because the server can classify the messages in the second message into at least one message group based on the received second message and at least one group identifier that are sent by the first electronic device, and forward the at least one message group to the second electronic device sequentially according to the order indicated by the at least one group identifier. Therefore, flexibility of message sending can be improved.

An embodiment of this application further provides a readable storage medium. The readable storage medium stores a program or instructions. When the program or instructions are executed by a processor, each process of the foregoing embodiment of the message sending method is implemented, with the same technical effect achieved. To avoid repetition, details are not described herein again.

The processor is the processor in the electronic device described in the foregoing embodiment. The readable storage medium includes a computer-readable storage medium, for example, a computer read-only memory (Read-Only Memory, ROM), a random access memory (Random Access Memory, RAM), a magnetic disk, or an optical disc. In addition, an embodiment of this application provides a chip. The chip includes a processor and a communication interface. The communication interface is coupled to the processor. The processor is configured to run a program or instructions to implement each process of the foregoing embodiment of the message sending method, with the same technical effect achieved. To avoid repetition, details are not described herein again.

It should be understood that the chip provided in this embodiment of this application may also be referred to as a system-level chip, a system chip, a chip system, a system-on-chip, or the like.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A message sending method, wherein the method comprises:
receiving, by a first electronic device, a first input by a user for a first message, wherein the first message is M messages sent or unsent by the first electronic device, and M is a positive integer;
performing, by the first electronic device, first processing on the first message in response to the first input, to obtain a second message; and
sending, by the first electronic device, the second message through a server, wherein
in a case that the first message is the M sent messages, the first processing is processing for updating content or in a case that the first message is the M unsent messages, the first processing is message merging processing.

2. The method according to claim 1, wherein the first message is the M sent messages; and
after the performing, by the first electronic device, first processing on the first message in response to the first input, to obtain a second message, the method further comprises:
sending, by the first electronic device, indication information to the server, wherein the indication information is used to indicate any one of the following: the server deleting the first message in the server, and the server replacing the first message in the server with the second message.

3. The method according to claim 2, wherein the indication information is used to indicate the server to replace the first message in the server with the second message; and
after the sending, by the first electronic device, indication information to the server, the method further comprises:
displaying, by the first electronic device, the second message in a first area in a conversational interface, wherein the first area is a display area of the first message in the conversational interface, wherein
display forms of first content and second content in the second message are different, the first content is content in the first message, and the second content is content in the second message that is different from the first content.

4. The method according to any one of claims 1 to 3, wherein the first message is the M sent messages; and
before the receiving, by a first electronic device, a first input by a user for a first message, the method further comprises:
receiving, by the first electronic device, a second input by the user in the conversational interface, wherein the second input is an input for selecting the first message; and
in response to the second input, displaying, by the first electronic device, a message editing box in the conversational interface, displaying the first message in the message editing box, and displaying an input method interface corresponding to the message editing box, wherein
the first input is an input of content entered by the user through the input method interface.

5. The method according to claim 1, wherein the first message is the M unsent messages; and
before the receiving, by a first electronic device, a first input by a user for a first message, the method further comprises:
in a case that the first electronic device is in a message preview mode,
receiving, by the first electronic device, a third input by the user for N unsent messages; and
displaying, by the first electronic device, the N messages in the conversational interface in the preview mode in response to the third input, without sending the N messages, wherein the M unsent messages are messages among the N messages.

6. The method according to claim 5, wherein after the displaying the N messages in the conversational interface in the preview mode, the method further comprises:
receiving, by the first electronic device, a fourth input by the user; and
in response to the fourth input, performing, by the first electronic device, second processing corresponding to the fourth input, wherein the second processing comprises at least one of the following: adjusting an arrangement order of the N messages and updating content of at least one of the N messages, wherein
in a case that the second processing comprises adjusting the arrangement order of the N messages, an arrangement order of the M unsent messages in the second message is the same as an arrangement order of the M unsent messages among the N messages.

7. The method according to claim 1, 5, or 6, wherein the first message is the M unsent messages;
before the sending, by the first electronic device, the second message through a server, the method further comprises:
classifying, by the first electronic device, the M unsent messages into at least one message group, wherein each message group comprises at least one message among the M unsent messages, and messages in a same message group are associated with a same group identifier; and
the sending, by the first electronic device, the second message through a server comprises:
sending, by the first electronic device, the second message and at least one group identifier to the server, wherein the at least one group identifier is used to indicate, to the server, an order of forwarding messages in the second message.

8. A message sending method, comprising:
receiving, by a server, a second message and at least one group identifier that are sent by a first electronic device, wherein the second message is obtained by merging M messages unsent by the first electronic device, each group identifier is associated with at least one of the M messages, and the at least one group identifier is used to indicate, to the server, an order of forwarding messages in the second message; and
classifying, by the server, the messages in the second message into at least one message group based on the at least one group identifier, and forwarding the at least one message group to a second electronic device sequentially according to the order indicated by the at least one group identifier.

9. A message sending method, comprising:
receiving, by a second electronic device, a second message forwarded by a server, wherein the second message is a message obtained by a first electronic device by updating content of M messages sent by the first electronic device;
displaying, by the second electronic device, prompt information, wherein the prompt information is used to prompt a user that the M messages have been updated;
receiving, by the second electronic device, a target input by the user for the prompt information; and
displaying, by the second electronic device, the second message in a target area in a conversational interface in response to the target input, wherein the target area is a display area of a first message in the conversational interface.

10. A message sending apparatus, wherein the apparatus comprises a receiving module, a processing module, and a sending module, wherein
the receiving module is configured to receive a first input by a user for a first message, wherein the first message is M messages sent or unsent by a first electronic device, and M is a positive integer;
the processing module is configured to perform first processing on the first message in response to the first input received by the receiving module, to obtain a second message; and
the sending module is configured to send, through a server, the second message obtained by the processing module, wherein
in a case that the first message is the M sent messages, the first processing is processing for updating content; or in a case that the first message is the M unsent messages, the first processing is message merging processing.

11. A message sending apparatus, wherein the apparatus comprises a receiving module, a processing module, and a sending module, wherein
the receiving module is configured to receive a second message and at least one group identifier that are sent by a first electronic device, wherein the second message is obtained by merging M messages unsent by the first electronic device, each group identifier is associated with at least one of the M messages, and the at least one group identifier is used to indicate, to a server, an order of forwarding messages in the second message;
the processing module is configured to classify the messages in the second message into at least one message group based on the at least one group identifier; and
the sending module is configured to forward the at least one message group to a second electronic device sequentially according to the order indicated by the at least one group identifier.

12. An electronic device, comprising a processor, a memory, and a program or instructions stored in the memory and executable on the processor, wherein when the program or instructions are executed by the processor, the steps of the message sending method according to any one of claims 1 to 9 are implemented.

13. A readable storage medium, wherein the readable storage medium stores a program or instructions, and when the program or instructions are executed by a processor, the steps of the message sending method according to any one of claims 1 to 9 are implemented.

14. A computer software product, wherein the computer software product is executed by at least one processor to implement the message sending method according to any one of claims 1 to 9.

15. An electronic device, wherein the electronic device is configured to perform the message sending method according to any one of claims 1 to 9.

16. A chip, wherein the chip comprises a processor and a communication interface, the communication interface is coupled to the processor, and the processor is configured to run a program or instructions to implement the message sending method according to any one of claims 1 to 9.
